# FASCICULE DE BREVET EUROPEEN

(11) **EP 3 017 525 B1**
(45) Date de publication et mention de la délivrance du brevet: **25.10.2017**
(21) Numéro de dépôt: 14739101.5
(22) Date de dépôt: 04.07.2014
(51) Int. Cl.: H02K 1/27, H02K 16/02

(54) **GAMME D'ACTIONNEURS ELECTRIQUES ET PROCEDE DE FABRICATION D'UN MOTEUR COMPRIS DANS UN ACTIONNEUR APPARTENANT A UNE TELLE GAMME**
ANORDNUNG EINES ELEKTRISCHEN STELLANTRIEBS UND VERFAHREN ZUM HERSTELLEN EINES MOTORS EINES ZU EINER SOLCHEN ANORDNUNG GEHÖHRENDEN STELLANTRIEBS.
ARRANGEMENT OF ELECTRICAL ACTUATORS AND METHOD OF MANUFACTURING A MOTOR INCLUDED IN AN ACTUATOR BELONGING TO SUCH AN ARRANGEMENT

(30) Priorité: 05.07.2013 FR 1356626
(43) Date de publication de la demande: 11.05.2016
(73) Titulaire: SOMFY ACTIVITES SA, 74300 Cluses (FR)
(72) Inventeur: FOGGIA, Albert, F-74300 Cluses (FR); TOLLANCE, Thierry, F-74930 Pers-Jussy (FR); PEILLEX, Julien, F-74300 Cluses (FR)
(74) Mandataire: Lavoix
(86) Numéro de dépôt international: PCT/EP2014/064370
(87) Numéro de publication internationale: WO 2015/001106

(56) Documents cités:
- EP-A1- 1 503 485
- CN-A- 102 386 734
- CN-A- 102 832 771
- DE-A1- 2 721 032
- DE-A1-102004 019 468
- DE-U1-202005 017 738
- US-A1- 2006 273 686
- US-A1- 2010 164 321

## Description

La présente invention concerne une gamme d'actionneurs électriques et un procédé de fabrication d'un moteur compris dans un actionneur appartenant à une telle gamme.

Les actionneurs électriques considérés sont des actionneurs d'éléments mobiles de fermeture, d'occultation ou de protection solaire tel qu'un volet, une porte, une grille, un store, ou tout autre matériel équivalent, appelé par la suite écran.

Les écrans équipant les bâtiments présentent des dimensions variées et le choix des matériaux utilisés se répercute considérablement sur la masse et l'inertie des éléments mobiles et, par conséquent, sur le couple nécessaire à la manoeuvre de ceux-ci.

Les fabricants de moteurs et d'actionneurs permettant la manoeuvre automatique de tels écrans sont généralement confrontés à la nécessité de proposer une gamme d'actionneurs présentant des caractéristiques de couple différentes, des dimensions ou des alimentations différentes, afin d'être en adéquation avec les caractéristiques des écrans ou des installations comprenant ces écrans.

L'invention concerne en particulier les actionneurs dits « tubulaires » utilisés dans les applications domotiques. Des moteurs généralement utilisés dans ce type d'actionneurs sont des moteurs asynchrone, qu'il est possible d'alimenter directement à partir du secteur alternatif. D'autres moteurs utilisés sont des moteurs à courant continu, avec balais et collecteurs, qui sont alimentés à partir du réseau alternatif par le biais d'un convertisseur alternatif continu ou directement à partir d'un dispositif de stockage d'énergie, tels qu'une batterie. Alternativement, des moteurs électriques sans balais à commutation électronique sont régulièrement utilisés dans d'autres applications, tels que des pompes, des ventilateurs ou des outillages électriques.

Les actionneurs tubulaires présentent un carter allongé pour être enfilés dans un tube d'enroulement sur lequel la porte ou le volet s'enroule afin de libérer un accès (porte de passage, fenêtre). Les moteurs compris dans de tels actionneurs sont donc conçus pour présenter un diamètre restreint par rapport à leur longueur. Pour augmenter le couple produit par l'actionneur, il est connu de prévoir un diamètre d'actionneur plus important. Le moteur peut ainsi présenter un couple en sortie plus important, qui va de pair avec l'augmentation du diamètre d'enroulement de l'écran. Dans ce domaine des moteurs et actionneurs électriques, il est donc connu, par exemple du document US-A1-2006/273686 d'utiliser, suivant le couple à délivrer, des moteurs de construction similaire mais dont les diamètres sont différentes. C'est-à-dire que, suivant le couple à délivrer, un actionneur donné ne comprendra pas le même stator ni le même rotor qu'un autre actionneur. Il en résulte un coût de gestion de références multiples pour le fabricant et une dispersion des volumes de production renchérissant le prix unitaire des pièces utilisées, c'est-à-dire des rotors et stators et plus généralement des moteurs et des actionneurs.

En outre, il est connu que suivant le type de moteur électrique désiré, c'est-à-dire un moteur synchrone ou asynchrone ou à courant continu, les composants utilisés pour leur fabrication, c'est-à-dire les stators, rotors utilisés pour la construction, sont différents. Il en résulte aussi un coût de gestion de références multiples et une dispersion des volumes de production.

C'est à ces inconvénients qu'entend remédier l'invention en proposant une gamme d'actionneurs dont les coûts de fabrication en ce qui concerne leur moteur électrique sont réduits.

A cet effet, l'invention concerne une gamme d'au moins deux actionneurs selon la revendication 1.

Grâce à l'invention, le premier et le deuxième actionneurs utilisent le même noyau central ce qui permet de produire deux moteurs différents comprenant un noyau central identique formant soit un stator, soit un rotor. Ceci permet donc de réduire les coûts de fabrications des actionneurs et de diminuer le nombre de références pour le fabricant. On peut par exemple construire un premier actionneur, dont le diamètre est tel qu'il peut être inséré dans un tube d'enroulement de diamètre par exemple égal à 50 mm, qui inclut le même stator que celui utilisé pour la construction d'un deuxième actionneur qui délivre un couple supérieur que celui délivré par le premier moteur. Le deuxième actionneur permet, par exemple, de motoriser un volet dont le diamètre du tube sur lequel il est enroulé est plus important, c'est-à-dire par exemple égal à 60 mm.

Selon des aspects avantageux mais non obligatoires de l'invention, un tel moteur électrique peut incorporer une ou plusieurs des caractéristiques optionnelles des revendications 2 à 9.

L'invention concerne également un procédé de fabrication d'un moteur d'un actionneur selon la revendication 10.

L'invention sera mieux comprise et d'autres avantages de celle-ci apparaitront plus clairement à la lumière de la description qui va suivre d'une gamme d'au moins deux actionneurs et d'un procédé de fabrication d'un moteur compris dans un actionneur appartenant à une telle gamme, donnée seulement à titre d'exemple et faite en référence aux dessins annexé dans lesquels :
- la figure 1 est une représentation schématique d'une gamme d'actionneurs conforme à l'invention ;
- la figure 2 est une coupe axiale d'un moteur inclus dans un premier actionneur de la figure 1 ;
- la figure 3 est une coupe axiale d'un moteur inclus dans un deuxième actionneur de la figure 1 ;
- la figure 4 est une coupe axiale d'un moteur inclus dans un troisième actionneur de la figure 1 ;

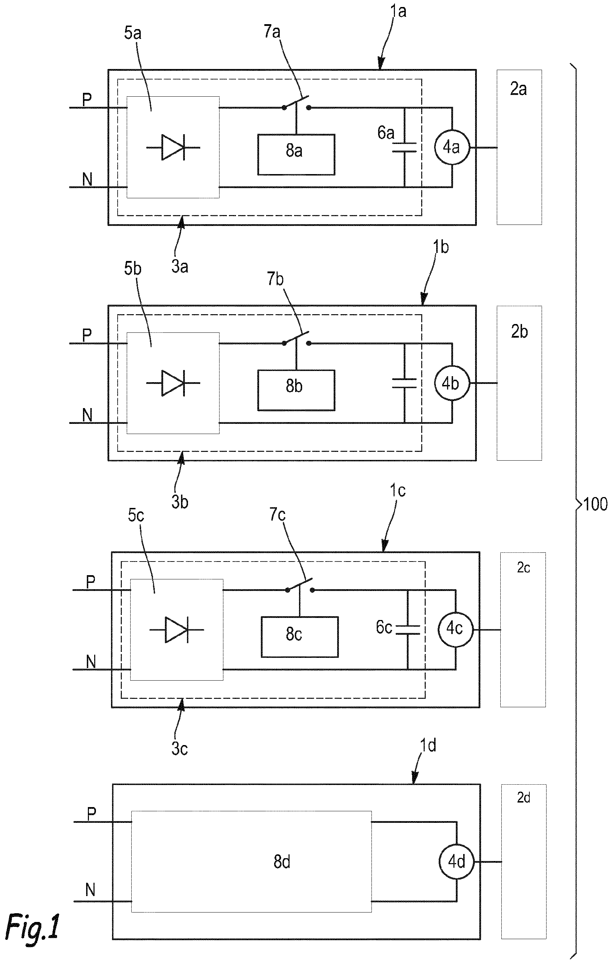

A la figure 1, une gamme 100 qui comprend un premier 1a, un deuxième 1b, un troisième 1c et un quatrième 1d actionneurs tubulaires est représentée. Ces actionneurs 1a, 1b, 1c et 1d sont alimentés par le secteur représenté par les fils de phase P et de neutre N. Ils permettent d'actionner un volet 2a, 2b, 2c, 2d.

En variante, le volet 2a, 2b, 2c, 2d est plus généralement un écran mobile de fermeture, d'occultation ou de protection solaire, s'enroulant sur un tube d'enroulement, non représenté, dont le diamètre intérieur est sensiblement équivalent au diamètre externe de l'actionneur, de sorte que l'actionneur puisse être inséré dans le tube. En variante, l'actionneur est destiné à être placé dans un rail profilé en U.

Les actionneurs 1a, 1b, 1c et 1d comprennent respectivement un premier, deuxième, troisième, quatrième moteurs électriques 4a, 4b, 4c, 4d, qui sont différents les uns des autres. Les premier et deuxième moteurs 4a, 4b sont notamment de type à courant continu sans balais à commutation électronique, le troisième moteur 4c est de type à courant continu, tandis que le quatrième moteur 4d est de type asynchrone.

Les actionneurs 1a, 1b, 1c comprennent chacun un premier, deuxième, troisième convertisseurs alternatif continu 3a, 3b, 3c. Les convertisseurs alternatif continu 3a, 3b, 3c ont une même structure électronique, le dimensionnement de certains composants étant différent. Les convertisseurs 3a, 3b et 3c sont par exemple du type à découpage (modulation de largeur d'impulsion). En variante, les convertisseurs 3a, 3b et 3c sont du type à transformateur et redresseur.

Les convertisseurs 3a, 3b, 3c comprennent chacun un dispositif de redressement 5a, 5b, 5c de la tension du secteur, un condensateur 6a, 6b, 6c, un transistor 7a, 7b, 7c et un circuit de commande 8a, 8b, 8c, qui sont adaptés à la gamme de puissance délivrable par le moteur 4a, 4b, 4c. Pour chaque premier, deuxième, troisième actionneur 1a, 1b, 1c, la tension de secteur est redressée par le dispositif de redressement 5a, 5b, 5c correspondant et est utilisée pour charger le condensateur 6a, 6b, 6c correspondant disposé entre les bornes de sortie du convertisseur 3a, 3b, 3c correspondant. La charge du condensateur 6a, 6b, 6c est commandée par le transistor 7a, 7b, 7c qui est piloté par le circuit de commande 8a, 8b, 8c.

Le quatrième actionneur 1d comprend un relais 8d de pilotage du quatrième moteur 4d relié, d'une part, à la phase P et au neutre N et, d'autre part, au quatrième moteur 4d.

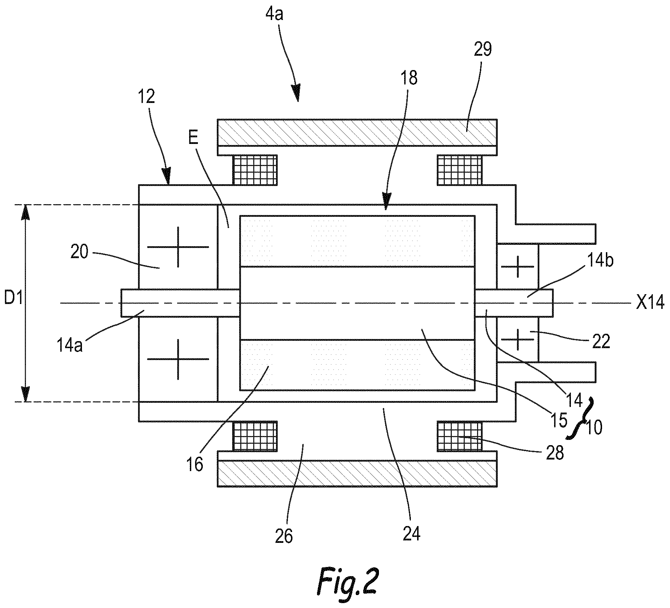

Les premier, deuxième et troisième moteurs 4a, 4b et 4c correspondant respectivement aux trois actionneurs 1a, 1b et 1c sont respectivement représentés aux figures 2, 3 et 4.

Le premier moteur 4a, montré seul à la figure 2, comprend un rotor 10 et un stator 12.

Le rotor 10 comprend un corps de rotor 15, qui est entouré par le stator 12. Ce rotor 10 comprend également un arbre de rotor 14, sur lequel est fixé le corps de rotor 15. Le rotor 10 et le stator 12 sont disposés de manière coaxiale autour d'un axe géométrique X14. Le corps de rotor 15 est relié solidairement en rotation à l'arbre 14, qui est centré sur l'axe X14 et qui dépasse de part et d'autre du corps 15. Ainsi, l'arbre de rotor 14 comprend une première 14a et une deuxième 14b extrémités en saillie du corps de rotor 15.

Par commodité, la suite de la description des moteurs 4a, 4b, 4c et 4d est orientée par rapport à l'axe X14, en considérant que les termes « intérieur » et « interne » qualifient une partie du moteur 4a, 4b, 4c ou 4d qui est dirigée transversalement vers l'axe X14, tandis que les termes « extérieur » et « externe » correspondent à une direction transversale de sens opposé.

Le corps de rotor 15 est généralement formé à partir d'un empilage de tôle ou par un arbre massif et, sur la circonférence extérieure du corps de rotor 15, un aimant permanent 16 est positionné. L'aimant permanent 16 entoure le corps 15. L'aimant 16 est séparé du stator 12 par un entrefer 18. L'aimant permanent 16 est constitué soit d'un aimant annulaire polarisé comme présenté à la figure 2, soit de plusieurs aimants séparés, rapportés sur la circonférence extérieur du corps de rotor par collage, surmoulage ou toute autre technique connu. L'aimant permanent 16 correspond plus généralement à des éléments magnétiques 16 positionnés sur la circonférence extérieure du corps de rotor 15.

Le stator 12 définit un espace annulaire interne E dans lequel le rotor 10, et notamment l'aimant permanent 16, est positionné et à l'intérieur duquel le rotor 10 est en rotation lorsque le moteur 4a fonctionne.

Le diamètre D1 de l'espace annulaire E est tel que cet espace E reçoit le rotor 10 ainsi que l'aimant permanent 16. La partie magnétique (ou magnétisée) du rotor 10 se trouvant à l'intérieur de l'espace annulaire E interne au stator 12, le rotor 10 est qualifié de rotor interne.

L'espace annulaire E reçoit également un premier palier 20 et un deuxième palier 22 de rotation de l'arbre 14. En effet, l'arbre de rotor 14 est supporté au niveau des deux extrémités 14a et 14b par l'intermédiaire des deux paliers de rotation 20 et 22. Plus précisément, la première extrémité 14a de l'arbre 14 est en contact avec le premier palier 20 tandis que la deuxième extrémité 14b de l'arbre 14 est en contact avec le deuxième palier 22. Les paliers 20 et 22 sont, par exemple, des roulements à billes. Les premier 20 et deuxième 22 paliers sont ainsi positionnés de part et d'autre du corps de rotor 15, parallèlement à l'axe X14.

Un noyau central 24, est ici formé par le noyau de stator 24 appartenant au stator 12. Le noyau de stator 24 est en matériau magnétisable et plus spécifiquement en matériau ferromagnétique, et est généralement formé par un empilage de tôles et muni de garnitures isolantes.

Le noyau de stator 24 comprend des éléments polaires 26, répartis sur la périphérie extérieure du stator 12 et en saillie vers l'extérieur. Des bobinages 28 sont positionnés autour des éléments polaires 26 du stator 12 globalement parallèlement à l'axe X14. Plus précisément, chaque élément polaire 26 est entouré par un bobinage 28 qui lui est propre. Les bobinages 28 sont reliés de sorte que lorsqu'ils sont parcourus par un courant, ils produisent un champ magnétique tournant qui entraine le rotor 10. Les bobinages 28 sont isolés du noyau de stator 24. De même que le stator 12, le noyau central 24 définit l'espace annulaire E de diamètre D1.

Le stator 12, c'est-à-dire le noyau central 24, comprend sur sa circonférence extérieure une culasse 29. La culasse 29 entoure le stator 12, c'est-à-dire le noyau central 24, qui est propre à la recevoir, et est centrée sur l'axe X14. Cette culasse 29 permet la circulation du flux magnétique.

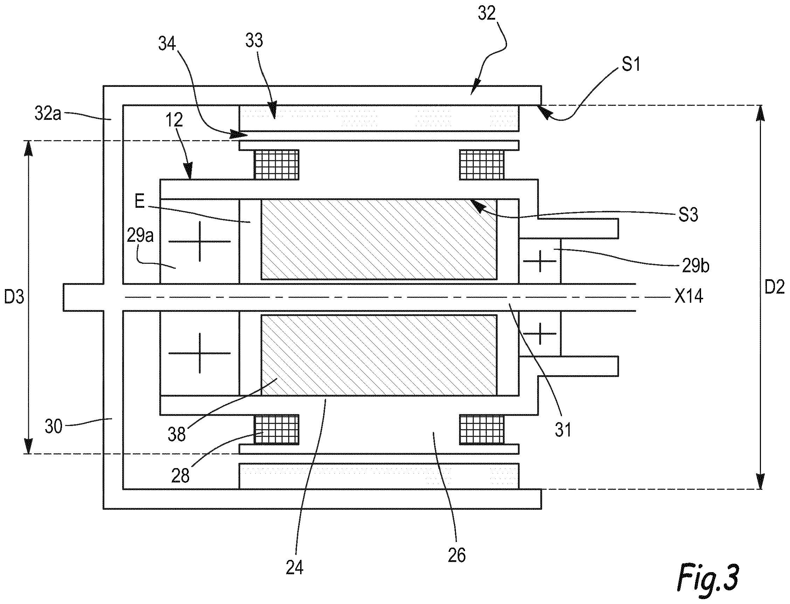

Le deuxième moteur 4b du deuxième actionneur 1b, représenté à la figure 3, comprend un stator qui est identique au stator 12 du premier moteur 4a, si bien que, sur la figure 3, le stator est pointé par la même référence 12. Plus précisément, le moteur 4b comprend un noyau central qui est identique au noyau de stator 24 du premier moteur 4a, si bien que, sur la figure 3, le noyau central est pointé par la même référence 24. En outre, les bobinages du stator 12 du deuxième moteur 4b sont identiques aux bobinages 28 du stator 12 du premier moteur 4a et portent donc la même référence.

Le moteur 4b comprend également des paliers de rotation 29a et 29b qui sont de préférences identiques aux paliers 20, 22 présentés pour le premier moteur 4a. En variante, les paliers 29a, 29b sont différents des paliers 20, 22 du premier moteur 4a.

Le moteur 4b comprend, à la différence du moteur 4a, un rotor 30 qui comprend un arbre de rotor 31 centré sur l'axe X14 et un corps de rotor 32 positionné coaxialement avec le stator 12 autour de l'axe X14, en entourant le stator 12.

Plus précisément, le rotor 30 est un rotor cloche, c'est-à-dire qu'il entoure le stator 12, comprend l'arbre de rotor 31 en son centre et son corps 32 a une forme globalement cylindrique avec un diamètre interne D2 supérieur au diamètre externe D3 du stator 12. De plus la structure du rotor 30 est telle que, suivant l'axe X14, d'un coté du stator 12, le rotor 30 et plus spécifiquement le corps de rotor 32 comprend une base discoïdale 32a de fermeture et, de l'autre côté, le corps de rotor 32 est ouvert. Le corps de rotor 32 comprend sur une face interne S1, en regard des éléments polaires 26 du stator 12, un aimant permanent 33. L'aimant permanent 33 est constitué soit d'un aimant annulaire polarisé comme présenté à la figure 3, soit de plusieurs aimants séparés, rapportés sur la circonférence extérieur du corps de rotor par collage, surmoulage ou toute autre technique connu. L'aimant permanent 33 entoure le stator 12 et est centré sur l'axe X14. En outre, la dimension radiale de l'aimant 33 et le diamètre interne D2 du corps de rotor 32 sont tels qu'un entrefer 34 existe entre l'aimant 33 et l'extérieur du stator 12, de sorte que le rotor 30 est qualifié de rotor externe.

L'aimant permanent 33 permet la rotation du rotor 30 lorsque le courant traversant les bobinages 28 créé un champ magnétique. L'aimant permanent 33 correspond plus généralement à des éléments magnétiques 33 qui entourent le stator 12 et sont positionnés sur la face interne S1.

Le rotor 30 est lui-même réalisé par empilement de tôles, notamment la cloche du rotor sert de culasse pour le rebouclage du flux magnétique. Il est également possible de rapporter une culasse externe si besoin.

En outre, le stator 12, c'est-à-dire le noyau central 24 comprend, dans son espace annulaire interne E, une culasse 38. La culasse 38 entoure l'arbre 31 et est centrée sur l'axe X14. Elle remplit globalement l'espace interne E. Une face interne S3 du noyau central 24, en regard de l'arbre 31, est propre à recevoir cette culasse 38. La culasse 38 est en matériau ferromagnétique et court sur la circonférence de la face interne S3. La culasse 38 a une structure feuilletée, c'est-à-dire qu'elle est formée à partir d'un empilage de tôles. En variante, elle est massive.

La culasse 38 permet le rebouclage du flux magnétique et permet aussi d'augmenter les performances du moteur 4b.

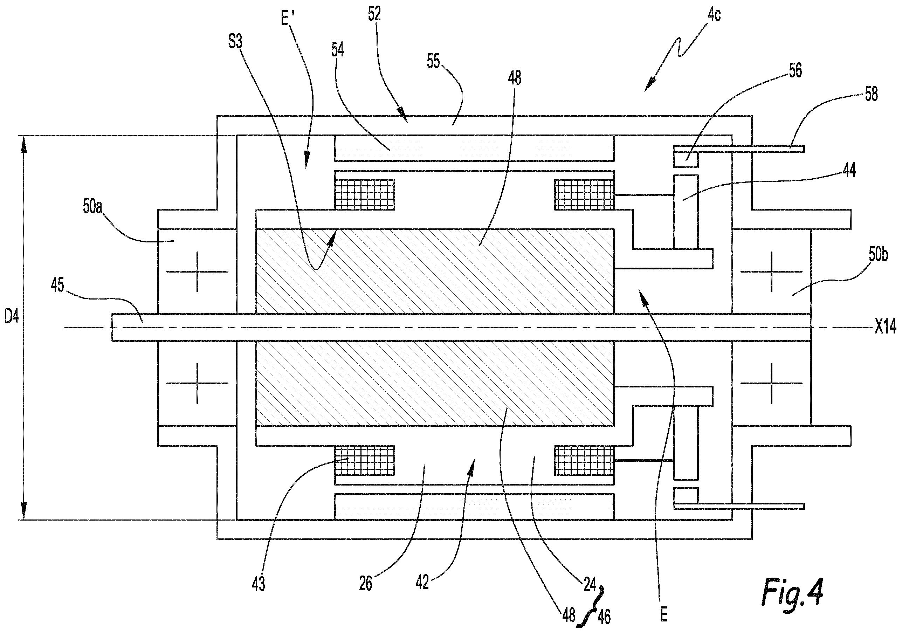

Le moteur 4c du troisième actionneur 1c, représenté à la figure 4, comprend un rotor 42 formé par un noyau central qui est identique au noyau de stator 24 du premier moteur 4a, si bien que, sur la figure 4, le noyau central est pointé par la même référence 24. Le noyau central 24 est centré sur et positionné autour de l'axe X14.

Le noyau central 24 comprend des éléments polaires identiques aux éléments polaires 26 du premier et du deuxième moteurs 4a, 4b et pointés par la même référence 26.

Les éléments polaires 26 sont entourés par des bobinages 43 parallèlement à l'axe central X14. Chaque bobinage 43 est relié électriquement à un collecteur 44 fixé sur une face externe du noyau central 24, c'est-à-dire du rotor 42. Chaque collecteur 44 est dit tournant, et propre à tourner de manière analogue au deuxième rotor 42 ainsi qu'à alimenter en courant les bobinages 43.

Ainsi, de part sa structure supportant des bobinages 43, le rotor 42 est dit rotor bobiné.

Le rotor 42 comprend un arbre de rotor 45 centré sur l'axe X14 et un corps de rotor 46 formé par le noyau central 24 et une culasse 48. Le rotor 42 forme comme le stator 12 du premier moteur 4a un premier espace annulaire interne, similaire à l'espace annulaire interne E du premier moteur 4a et portant la même référence E. Le premier espace annulaire interne E est propre à recevoir la culasse 48 qui entoure l'arbre de rotor 45. Plus précisément, une face interne similaire à la face interne S3 du noyau central 24 du deuxième moteur 4b et portant la même référence S3, est en regard de l'arbre 45 et est propre à recevoir la culasse 48. La culasse 48 est en matériau ferromagnétique et court sur la circonférence de la face interne S3. La culasse 48 a une structure feuilletée, c'est-à-dire qu'elle est formée à partir d'un empilage de tôles. En variante, elle est massive. La culasse 48 est mécaniquement reliée en rotation à l'arbre 45 et permet d'améliorer les performances du moteur 4c, en augmentant le rebouclage du flux magnétique.

Le moteur 4c comprend des paliers de rotation 50a, 50b de dimension plus grande que les paliers 20, 22 présentés pour le premier moteur 4a.

Le moteur 4c comprend un stator 52 différent du stator 12 du premier moteur 4a. Le stator 52 définit un deuxième espace annulaire interne E' dans lequel le rotor 42 est positionné et à l'intérieur duquel le rotor 42 est en rotation lorsque le moteur 4c fonctionne. Le rotor 42 et le stator 52 sont positionnés de manière coaxiale autour de l'axe central X14. Le deuxième rotor 42 est donc muni de la culasse 48, des bobinages 43 et du noyau central 24 qui correspondent à des éléments magnétiques entourés par le deuxième stator 52.

Le diamètre D4 du deuxième espace annulaire E' est tel que cet espace E' reçoit le rotor 42 ainsi qu'un aimant permanent 54 fixé sur une face interne du stator 52. Le diamètre D4 du deuxième espace annulaire E' est supérieur au diamètre D1 de l'espace annulaire E du stator 12, c'est-à-dire du noyau central 24.

La partie magnétique (ou magnétisée) du rotor 42 se trouvant à l'intérieur du deuxième espace annulaire interne E' du stator 52, le rotor 42 est qualifié de rotor interne. De plus, comme il supporte les bobinages 43, le rotor 42 est qualifié de rotor interne bobiné.

Le stator 52 est formé par un noyau de stator 55 en matériau magnétisable et plus spécifiquement en matériau ferromagnétique. Le noyau de stator 55 est généralement formé par un empilage de tôles.

Le stator 52 comprend des balais 56 en regard des collecteurs 44, propres à transmettre un courant, délivré par une alimentation électrique 58, aux collecteurs 44 et par liaison électrique aux bobinages 43.

Le moteur 4d du quatrième actionneur 1d a une structure globalement similaire au moteur 4a de la figure 1. Cependant le moteur 4d comprend un rotor différent du premier moteur 4a. Plus précisément, le rotor du quatrième moteur 4d comprend, sur sa circonférence extérieure, soit un aimant permanent, comme représenté à la figure 1, soit des bobinages.

Ainsi, le rotor du quatrième moteur 4d est muni soit de l'aimant précité, soit des bobinages précités qui correspondent à des éléments magnétiques.

Par ailleurs, le moteur 4d comprend un stator de forme extérieure globalement similaire au stator 12 du premier moteur 4a (ainsi que représenté figure 2), avec des éléments polaires similaires aux éléments polaires 26 du stator 12. Dans le quatrième moteur 4d, les éléments polaires comprennent des bobinages en commun, c'est-à-dire qu'un même bobinage entoure plusieurs éléments polaires, de manière à ce que le moteur 4d soit de type asynchrone. Or, dans le premier moteur 4a, un bobinage 28 est propre à et entoure qu'un seul élément polaire 26. De manière analogue à ce qui a été présenté pour la figure 2, le stator 12 du moteur 4d comprend sur sa périphérie extérieure une culasse qui entoure le stator 12.

Le stator du quatrième moteur 4d entoure les éléments magnétiques appartenant au rotor du quatrième moteur 4d.

Au vu des explications fournies jusqu'ici, on comprend que l'espace annulaire interne E du noyau central 24 est propre à recevoir indifféremment le rotor interne 10 ou la culasse 38, ou la culasse 48 suivant que le stator est agencé respectivement dans le premier moteur 4a ou le deuxième moteur 4b ou le troisième moteur 4c.

Ainsi, afin de construire le premier actionneur 1a et plus spécifiquement le premier moteur 4a, on dispose du noyau de stator 24 formant le stator 12 qui est bobiné, avec un bobinage 28 pour chaque élément polaire 26, et du rotor interne 10 : le rotor 10 est assemblé avec le noyau de stator 24, c'est-à-dire que le rotor 10, muni de l'aimant 16, est positionné dans l'espace annulaire interne E ainsi que les paliers 20 et 22. En complément, la culasse 29 est positionnée autour du stator 12.

Pour fabriquer le deuxième actionneur 1b et plus spécifiquement le moteur 4b, on dispose du noyau central 24 formant le stator 12 et du rotor externe 30 : le rotor externe 30 est assemblé avec le noyau central 24, c'est-à-dire que le rotor externe 30, muni de l'aimant 33, et le noyau central 24, ainsi que les paliers 29a et 29b, sont assemblés coaxialement suivant l'axe X14. En complément, avant de positionner les paliers 29a et 29b, la culasse 38 est fixée sur la surface interne S3.

Dans la mesure où un moteur à rotor externe fournit un couple plus important qu'un moteur à rotor interne, toute chose étant égale par ailleurs, notamment lorsque ces deux moteurs comprennent le même stator, lors de la fabrication d'un des moteurs 4a et 4b, on dispose d'un unique noyau central 24 formant le stator 12, d'un rotor interne 10 et d'un rotor externe 30, puis on assemble le noyau central 24 avec soit le rotor interne 10, soit le rotor externe 30 suivant le couple que le moteur à construire doit délivrer.

Pour fabriquer le troisième actionneur 1c et plus spécifiquement le moteur 4c, on dispose du noyau central 24 formant le rotor 42 et du stator 52 : le noyau central 24 est assemblé avec le stator 52, c'est-à-dire que le noyau central 24 muni de la culasse 48 et des bobinages 43 reliés aux collecteurs 44 est positionné dans le deuxième espace annulaire interne E', les collecteurs 44 étant en regard des balais 56.

Sachant que le rotor 42 a un diamètre plus important que le rotor 10 puisqu'il est formé du noyau central 24 qui est propre à recevoir le rotor 10 et que le diamètre D4 de l'espace E' est supérieur au diamètre D1 de l'espace E, le troisième moteur 4c est propre à fournir un couple plus important que le premier moteur 4a. Ainsi lors de la fabrication d'un des moteurs 4a et 4c, on dispose d'un unique noyau central 24, d'un rotor interne 10 et d'un stator 52, puis on assemble le noyau central 24 avec soit le rotor 10, soit le stator 52 suivant le couple que le moteur à construire doit délivrer.

Pour fabriquer le quatrième actionneur 1d et plus spécifiquement le quatrième moteur 4d, on dispose du noyau central 24 et d'un rotor différent du rotor 10 : le noyau central 24 est alors bobiné différemment par rapport au premier moteur 4a. En effet, le noyau central 24 est bobiné de manière à ce que plusieurs éléments polaires soient entourés par le même bobinage.

Lors de la fabrication d'un des moteurs 4a et 4d, on dispose d'un unique noyau central 24, d'un rotor interne 10 et d'un autre rotor différent du rotor 10 : puis on bobine les éléments polaires 26 du noyau central 24 de manière à ce que chaque élément polaire 26 soit entouré par un bobinage 28 qui lui est propre, et on assemble le noyau central 24 avec le rotor interne 10, pour avoir un moteur à courant continu sans balais à commutation électronique, ou on bobine les éléments polaires 26 du noyau central de manière à ce qu'au moins un bobinage entoure plusieurs éléments polaires 26, et on assemble le noyau central 24 avec le rotor interne 10, pour avoir un moteur asynchrone.

Le fait d'utiliser un même noyau central 24 pour la gamme d'actionneurs 100 qui délivrent différentes valeurs de couple et comprend différents types de moteurs permet de réduire les coûts de gestion et de fabrication et d'étendre une gamme d'actionneurs, utilisant le même type de noyau central 24 à des applications nécessitant des types de moteurs différents ou des couples différents, notamment à des applications de motorisation de volets ou de portes de taille et/ou de poids différents, voire à d'autres types d'applications (par exemple grilles commerciales)..

Selon une autre variante non représentée, les moteurs 4a, 4b, 4c et 4d ne comprennent qu'un seul palier de rotation.

## Revendications

1. Gamme (100) d'au moins deux actionneurs (1a ; 1b ; 1c ; 1d), comprenant :
- un premier actionneur (1a), qui inclut un premier moteur (4a) délivrant un premier couple, lequel premier moteur comprend un premier rotor (10) et un premier stator (12), qui sont positionnés de manière coaxiale autour d'un premier axe (X14), le premier rotor (10) comprenant un premier corps de rotor (15) muni d'éléments magnétiques (16) entourés par le premier stator (12), le premier stator (12) étant formé par un noyau de stator (24) comprenant des premiers éléments polaires (26) répartis sur la périphérie extérieure du premier stator (12) et en saillie vers l'extérieur
- un second actionneur (1b ; 1c ; 1d), qui inclut un deuxième moteur (4b ; 4c ; 4d), lequel deuxième moteur (4b ; 4c ; 4d) comprend un deuxième rotor (30 ; 42), et un deuxième stator (12 ; 52), le deuxième rotor (30 ; 42) et le deuxième stator (12 ; 52) étant positionnés de manière coaxiale autour d'un deuxième axe (X14), le deuxième moteur (4b ; 4c ; 4d) comportant un noyau central (24) qui est identique audit noyau de stator (24) qui forme soit le deuxième rotor (30 ; 42) soit le deuxième stator (12 ; 52) et qui comprend des deuxièmes éléments polaires (26) répartis sur la périphérie extérieure du deuxième rotor (30 ; 42) ou du deuxième stator (12 ; 52) et en saillie vers l'extérieur, l'un des deuxièmes rotor (30; 42) et stator (12; 52) présentant une différence avec respectivement les premiers rotor (10) et stator (12).

2. Gamme selon la revendication 1, **caractérisée en ce que** le premier rotor (10) comprend un premier arbre de rotor (14), qui est lié en rotation au premier corps de rotor (15), en étant centré sur le premier axe (X14), et **en ce que** le deuxième rotor dit externe (30) comprend un deuxième corps de rotor (32) muni d'éléments magnétiques (33), qui entoure le deuxième stator (12) et un deuxième arbre de rotor (31), qui est lié en rotation au deuxième corps de rotor (32), en étant centré sur le deuxième axe (X14), le noyau central (24) formant le deuxième stator (12), de manière à ce que le deuxième moteur (4b) soit un moteur à rotor externe.

3. Gamme selon la revendication 1, **caractérisée en ce que** le deuxième rotor (42) est muni d'éléments magnétiques (42, 43, 48) entourés par le deuxième stator (52) en étant centré sur le deuxième axe (X14), le noyau central (24) formant le deuxième rotor (42), et **en ce que** les deuxièmes éléments polaires (26) sont entourés par des bobinages (43) globalement parallèlement au deuxième axe (X14), de manière à ce que le deuxième moteur (4c) soit un moteur à rotor bobiné.

4. Gamme selon la revendication 1, **caractérisée en ce que** chaque premier élément polaire (26) est entouré par au moins un premier bobinage (58) propre à chaque élément polaire (26), parallèlement au premier axe (X14), le premier moteur (4a) étant un moteur sans-balais à courant continu à commutation électronique, **en ce que** le deuxième rotor est muni d'éléments magnétiques entourés par le deuxième stator, le noyau central (24) formant le deuxième stator, et **en ce que** plusieurs deuxième éléments polaires sont entourés par un même deuxième bobinage, de manière à ce que le deuxième moteur (4d) soit un moteur asynchrone.

5. Gamme selon l'une des revendications précédentes, **caractérisée en ce que** le premier moteur (4a) comprend une première culasse (29), qui est centrée sur le premier axe (X14), qui est agencée sur la périphérie extérieure du premier stator (12) et qui entoure le premier stator (12).

6. Gamme selon la revendication 2 ou 3, **caractérisée en ce que** le deuxième moteur comprend une deuxième culasse (38 ; 48) qui est reçue sur une face (S3) interne du noyau central (24), qui est centrée sur le deuxième axe (X14) et qui entoure le deuxième arbre de rotor (31 ; 45), et **en ce que** le noyau central (24) délimite un premier espace annulaire interne (E) autour du premier axe (X14) et du deuxième axe (X14), qui est propre à recevoir indifféremment le rotor interne (10) ou la deuxième culasse (38 ; 48).

7. Gamme selon la revendication 4, **caractérisée en ce que** le deuxième moteur (4d) comprend une troisième culasse qui est centrée sur le deuxième axe (X14) et qui est agencée sur la périphérie extérieure du deuxième stator (12) et qui entoure le deuxième stator (12).

8. Gamme selon la revendication 3, **caractérisée en ce que**, chaque bobinage (43) est connecté électriquement à un collecteur (44) dit tournant, fixé sur le deuxième rotor et propre à tourner de manière analogue au deuxième rotor (42), ainsi qu'à alimenter en courant les bobinages (43) grâce à des balais (56) positionnés en regard de chaque collecteur (44) et fixés au deuxième stator (52).

9. Gamme selon les revendications 3 et 6, **caractérisée en ce que** le deuxième stator (52) forme un deuxième espace annulaire interne (E') dont un premier diamètre (D4) est supérieur à un deuxième diamètre (D1) du premier espace annulaire interne (E).

10. Procédé de fabrication d'un moteur (4a ; 4b, 4c, 4d) d'un actionneur (1a, 1b, 1c, 1d), dans lequel on dispose d'un unique noyau central (24), d'un premier rotor (10) et d'un deuxième stator (52) ou d'un deuxième rotor (30),
**caractérisé en ce que** le noyau central est :
- soit associé avec le premier rotor (10) afin de former un premier moteur (4a) comprenant le premier rotor (10) et un premier stator (12) formé par le noyau central,
- soit associé avec le deuxième rotor (30) ou le deuxième stator (52) afin de former un deuxième moteur (4b ; 4c ; 4d) différent du premier moteur et comprenant soit le deuxième rotor (30) et un stator (12) qui est formé par le noyau central (24), soit le deuxième stator (52) et un rotor (42) qui est formé par le noyau central (24), suivant le couple à délivrer et le type de moteur désiré.

## Patentansprüche

1. Baureihe (100) von mindestens zwei Stellvorrichtungen (1a; 1b; 1c; 1d), umfassend:
- eine erste Stellvorrichtung (1a), die einen ersten, ein erstes Drehmoment liefernden Motor (4a) einschließt, wobei der erste Motor einen ersten Rotor (10) und einen ersten Stator (12) umfasst, die in koaxialer Weise um eine erste Achse (X14) positioniert sind, wobei der erste Rotor (10) einen ersten Rotorkörper (15) umfasst, der mit um den ersten Stator (12) herum angeordneten Magnetelementen (16) ausgerüstet ist, und der erste Stator (12) durch einen Statorkern (24) gebildet wird, der erste Polstücke (26) umfasst, die über den Außenumfang des ersten Stators (12) verteilt sind und nach außen hervorspringen,
- eine zweite Stellvorrichtung (1b; 1c; 1d), die einen zweiten Motor (4b; 4c; 4d) einschließt, wobei der zweite Motor (4b; 4c; 4d) einen zweiten Rotor (30; 42) und einen zweiten Stator (12; 52) umfasst, wobei der zweite Rotor (30; 42) und der zweite Stator (12; 52) in koaxialer Weise um eine zweite Achse (X14) positioniert sind, wobei der zweite Motor (4b; 4c; 4d) einen Mittelkern (24) aufweist, der identisch zu dem Statorkern (24) ist, der entweder den zweiten Rotor (30; 42) oder den zweiten Stator (12; 52) bildet und der zweite Polstücke (26) umfasst, die um den Außenumfang des zweiten Rotors (30; 42) oder des zweiten Stators (12; 52) herum verteilt sind und nach außen hervorspringen, wobei der zweite Rotor (30; 42) oder der zweite Stator (12; 52) einen Unterschied mit jeweils dem ersten Rotor (10) und dem ersten Stator (12) aufweist.

2. Baureihe nach Anspruch 1, **dadurch gekennzeichnet, dass** der erste Rotor (10) eine erste Rotorwelle (14) umfasst, die hinsichtlich der Drehung mit dem ersten Rotorkörper (15) verbunden ist und dabei auf die erste Achse (X14) zentriert ist, und dass der zweite Rotor, genannt Außenrotor (30) einen zweiten Rotorkörper (32), der mit den zweiten Stator (12) umgebenden Magnetelementen (33) ausgerüstet ist, und eine zweite Rotorwelle (31) umfasst, die hinsichtlich der Drehung mit dem zweiten Rotorkörper (32) verbunden ist und dabei auf die zweite Achse (X14) zentriert ist, wobei der Mittelkern (24) den zweiten Stator (12) bildet, derart, dass der zweite Motor (4b) ein Außenläufermotor ist.

3. Baureihe nach Anspruch 1, **dadurch gekennzeichnet, dass** der zweite Rotor (42) mit Magnetelementen (42, 43, 48) ausgerüstet ist, die von dem zweiten Stator (52) umgeben sind und dabei auf die zweite Achse (X14) zentriert sind, wobei der Mittelkern den zweiten Rotor (42) bildet, und dass die zweiten Polstücke (26) von im Wesentlichen parallel zur zweiten Achse (X14) liegenden Wicklungen (43) umgeben sind, derart, dass der zweite Motor (4c) ein Schleifringläufermotor ist.

4. Baureihe nach Anspruch 1, **dadurch gekennzeichnet, dass** jedes erste Polstück (26) von mindestens einer ersten zu jedem Polstück (26) gehörenden Wicklung (58) parallel zur ersten Achse (X14) umgeben ist, wobei der erste Motor (4a) ein bürstenloser Gleichstrommotor mit elektronischer Kommutierung ist, dass der zweite Rotor mit von dem zweiten Stator umgebenden Magnetelementen ausgerüstet ist, wobei der Mittelkern (24) den zweiten Stator bildet, und dass mehrere zweite Polstücke von einer selben zweiten Wicklung umgeben sind, derart, dass der zweite Motor (4d) ein Asynchronmotor ist.

5. Baureihe nach einem der vorhergehenden Ansprüche, **dadurch gekennzeichnet, dass** der erste Motor (4a) ein erstes Joch (29) umfasst, das auf die erste Achse (X14) zentriert ist, über dem Außenumfang des ersten Stators (12) angeordnet ist und den ersten Stator (12) umgibt.

6. Baureihe nach Anspruch 2 oder 3, **dadurch gekennzeichnet, dass** der zweite Motor ein zweites Joch (38; 48) umfasst, das auf einer Innenseite (S3) des Mittelkerns (24) aufgenommen ist, auf die zweite Achse (X14) zentriert ist und die zweite Rotorwelle (31; 45) umgibt, und dass der Mittelkern (24) einen ersten Innenringraum (E) um die erste Achse (X14) und die zweite Achse (X14) herum begrenzt, der geeignet ist, gleichermaßen den Innenrotor (10) oder das zweiten Joch (38; 48) aufzunehmen.

7. Baureihe nach Anspruch 4, **dadurch gekennzeichnet, dass** der zweite Motor (4d) ein drittes Joch umfasst, das auf die zweite Achse (X14) zentriert ist und das über dem Außenumfang des zweiten Stators (12) angeordnet ist und den zweiten Stator (12) umgibt.

8. Baureihe nach Anspruch 3, **dadurch gekennzeichnet, dass** jede Wicklung (43) elektrisch mit einem Kollektor (44), genannt drehender Kollektor, verbunden ist, der an dem zweiten Rotor befestigt ist und geeignet ist, in analoger Weise zum zweiten Rotor (42) zu drehen sowie die Wicklungen (43) mittels Bürsten (56) mit Strom zu versorgen, die gegenüber von jedem Kollektor (44) positioniert und an dem zweiten Stator (52) befestigt sind.

9. Baureihe nach den Ansprüchen 3 und 6, **dadurch gekennzeichnet, dass** der zweite Stator (52) einen zweiten Innenringraum (E') bildet, dessen erster Durchmesser (D4) größer als ein zweiter Durchmesser (D1) des ersten Innenringraums (E) ist.

10. Verfahren zum Herstellen eines Motors (4a; 4b; 4c; 4d) einer Stellvorrichtung (1a; 1b; 1c; 1d), bei dem ein einziger Mittelkern (24), ein erster Rotor (10) und ein zweiter Stator (52) oder ein zweiter Rotor (30) zur Verfügung stehen,
**dadurch gekennzeichnet, dass** der Mittelkern
- sei es dem ersten Rotor (10) zugeordnet ist, um einen ersten Motor (4a) zu bilden, der den ersten Rotor (10) und einen ersten Stator (12) umfasst, der von dem Mittelkern gebildet wird,
- sei es dem zweiten Rotor (30) oder dem zweiten Stator (52) zugeordnet ist, um einen zweiten Motor (4b; 4c; 4d) unterschiedlich zum ersten Motor zu bilden und umfassend, sei es den zweiten Rotor (30) und einen Stator (12), der von dem Mittelkern (24) gebildet wird, sei es den zweiten Stator (52) und einen Rotor (42), der von dem Mittelkern (24) gebildet wird, gemäß dem zu liefernden Drehmoment und dem gewünschten Typ des Motors.

## Claims

1. Arrangement (100) of at least two actuators (1a; 1b; 1c; 1d) comprising:
- a first actuator (1a) which includes a first motor (4a) which supplies a first torque, which first motor comprises a first rotor (10) and a first stator (12) which are positioned coaxially about a first axis (X14), the first rotor (10) comprising a first rotor body (15) fitted with magnetic elements (16) which are surrounded by the first stator (12), the first stator (12) being formed by a stator core (24) comprising first polar elements (26) which are distributed over the external periphery of the first stator (12) and project towards the exterior
- a second actuator (1b; 1c; 1d) which includes a second motor (4b; 4c; 4d), which second motor (4b; 4c; 4d) comprises a second rotor (30; 42) and a second stator (12; 52), the second rotor (30; 42) and the second stator (12; 52) being positioned coaxially about a second axis (X14), the second motor (4b; 4c; 4d) comprising a central core (24) which is identical to said stator core (24) which forms either the second rotor (30; 42) or the second stator (12; 52) and which comprises second polar elements (26) which are distributed over the external periphery of the second rotor (30; 42) or of the second stator (12; 52) and project towards the exterior, one of the second rotor (30; 42) and stator (12; 52) being different respectively from the first rotor (10) and stator (12).

2. Arrangement according to claim 1, **characterised in that** the first rotor (10) comprises a first rotor shaft (14) which is connected in rotation to the first rotor body (15) by being centred on the first axis (X14), and **in that** the second rotor, termed external (30), comprises a second rotor body (32) which is fitted with magnetic elements (33) and surrounds the second stator (12), and a second rotor shaft (31) which is connected in rotation to the second rotor body (32) by being centred on the second axis (X14), the central core (24) forming the second stator (12) such that the second motor (4b) is a motor with an external rotor.

3. Arrangement according to claim 1, **characterised in that** the second rotor (42) is fitted with magnetic elements (42, 43, 48) which are surrounded by the second stator (52) by being centred on the second axis (X14), the central core (24) forming the second rotor (42), and **in that** the second polar elements (26) are surrounded by windings (43) which are globally parallel to the second axis (X14) such that the second motor (4c) is a motor with a wound rotor.

4. Arrangement according to claim 1, **characterised in that** each first polar element (26) is surrounded by at least one first winding (58) which belongs to each polar element (26), parallel to the first axis (X14), the first motor (4a) being a brushless motor with direct current by electronic commutation, **in that** the second rotor is fitted with magnetic elements which are surrounded by the second stator, the central core (24) forming the second stator, and **in that** several second polar elements are surrounded by an identical second winding, such that the second motor (4d) is an asynchronous motor.

5. Arrangement according to one of the preceding claims, **characterised in that** the first motor (4a) comprises a first yoke (29) which is centred on the first axis (X14), which is fitted over the external periphery of the first stator (12) and which surrounds the first stator (12).

6. Arrangement according to claim 2 or 3, **characterised in that** the second motor comprises a second yoke (38; 48) which is received on an internal face (S3) of the central core (24),which is centred on the second axis (X14) and which surrounds the second rotor shaft (31; 45), and **in that** the central core (24) delimits a first internal annular space (E) about the first axis (X14) and about the second axis (X14), which is able to receive either the internal rotor (10) or the second yoke (38; 48).

7. Arrangement according to claim 4, **characterised in that** the second motor (4d) comprises a third yoke which is centred on the second axis (X14) and which is fitted over the external periphery of the second stator (12 and which surrounds the second stator (12).

8. Arrangement according to claim 3, **characterised in that** each winding (43) is connected electrically to a collector (44), termed rotating, which is fixed on the second rotor and able to rotate analogously to the second rotor (42) thus supplying the windings (43) with current with the aid of brushes (56) which are positioned opposite each collector (44) and fixed to the second stator (52).

9. Arrangement according to claims 3 and 6, **characterised in that** the second stator (52) forms an internal annular space (E'), a first diameter (D4) of which is greater than a second diameter (D1) of the first internal annular space (E).

10. Method of manufacturing a motor (4a; 4b, 4c, 4d) of an actuator (1a, 1b, 1c, 1d) in which there is arranged a single central core (24), a first rotor (10) and a second stator (52) or a second rotor (30),
**characterised in that** the central core is:
- either associated with the first rotor (10) in order to form a first motor (4a) comprising the first rotor (10) and a first stator (12) which is formed by the central core,
- or associated with the second rotor (30) or the second stator (52), in order to form a second motor (4b; 4c; 4d) which is different from the first motor and comprises either the second rotor (30) and a stator (12) which is formed by the central core (24), or the second stator (52) and a rotor (42) which is formed by the central core (24), according to the torque to be supplied and the type of motor which is desired.
